# FASCICULE DE BREVET EUROPEEN

(11) **EP 0 478 460 B1**
(45) Date de publication et mention de la délivrance du brevet: **14.06.1995**
(21) Numéro de dépôt: 91402585.3
(22) Date de dépôt: 27.09.1991
(51) Int. Cl.: G02B 6/38, H01R 13/62

(54) **Connecteur alvéolaire comportant au moins un dispositif de connexion de fibres optiques**
Alveolarstecker mit mindestens einer optischen Steckverbindung
Alveolar connector with at least one optical connection

(30) Priorité: 28.09.1990 FR 9012012
(43) Date de publication de la demande: 01.04.1992
(73) Titulaire: RADIALL Société anonyme dite:, 93116 Rosny sous Bois (FR)
(72) Inventeur: Maillot, Gérard, F-93360 Neuilly Plaisance (FR)
(74) Mandataire: Leszczynski, André

(56) Documents cités:
- EP-A- 0 246 166
- DE-U- 9 005 904
- GB-A- 2 210 994
- US-A- 4 406 514

## Description

La présente invention est relative à un connecteur alvéolaire, comportant un élément de connecteur mâle et un élément de connecteur femelle présentant des corps pourvus d'alvéoles alignées aptes à recevoir au moins un dispositif de connexion de fibres optiques formé d'un contact mâle et d'un contact femelle coopérants.

De tels connecteurs généralement de type multicontacts sont utilisés pour relier des câbles ou les pistes d'une carte à circuit imprimé, dite carte-fille aux pistes d'une autre carte à circuit imprimé dite carte-mère.

Dans cette application, un élément de connecteur alvéolaire multicontacts de type mâle est monté sur la carte-fille et un élément femelle correspondant est monté sur la carte-mère.

De tels connecteurs pour cartes à circuit imprimé comportent des alvéoles destinées à recevoir différents types de contacts et notamment des alvéoles destinées à recevoir des contacts coaxiaux.

Des exemples de tels connecteurs sont fournis par la série de connecteurs selon la norme DIN 41612, ou encore par DE-U-90 05 904.

Compte-tenu du développement des connexions par fibres optiques, on a tout naturellement envisagé de monter dans ce type de connecteur des dispositifs de connexion de fibres optiques en mettant en place le contact optique mâle du dispositif de connexion de fibres optiques dans une alvéole d'un des éléments du connecteur et le contact optique femelle dans une alvéole de l'élément de connecteur en regard.

Or, les contacts optiques, en particulier les contacts pour fibres optiques monomode doivent avoir un très bon guidage axial et angulaire si l'on veut obtenir un affaiblissement faible de la connexion.

Ce guidage est en général obtenu par la présence d'un jeu radial faible entre les surfaces en regard du contact optique mâle et du contact optique femelle lorsque la connexion est réalisée.

Ce guidage est satisfaisant lorsque l'on assemble directement un contact mâle et un contact femelle montés respectivement à l'extrémité de câbles optiques.

Par contre, ce guidage n'est plus satisfaisant lorsque les contacts optiques mâle et femelle sont préalablement montés chacun dans une alvéole d'un élément de connecteur alvéolaire multicontacts pour cartes à circuit imprimé du type de ceux mentionnés ci-dessus.

En effet, les alvéoles de ces éléments de connecteur ainsi que leur position dans les corps isolants des éléments de connecteur ont des tolérances incompatibles avec les guidages demandés aux contacts optiques. Ces tolérances en effet ont été définies pour des connecteurs coaxiaux qui ne nécessitent qu'une précision de guidage plus faible que pour les connexions de fibres optiques. Les tolérances pour des contacts coaxiaux définies, notamment dans la norme DIN 41612, sont telles que les alvéoles des éléments de connecteur mâle et femelle (prise et fiche des connecteurs pour cartes imprimées) ne sont pas suffisamment bien alignées, par suite des excentrations, pour un accouplement bien guidé de contacts optiques mis en place dans les alvéoles de ces éléments de connecteur.

La présente invention se propose de réaliser un connecteur alvéolaire permettant de recevoir dans des alvéoles alignées des éléments de connecteur, au moins un dispositif de connexion de fibres optiques avec un bon guidage axial et angulaire malgré les excentrations des alvéoles.

Les caractéristiques du connecteur selon la présente invention font l'objet de la revendication 1.

Les portées en regard de la bague et du contact optique mobile constituent ainsi des moyens de pré-guidage permettant au contact optique mobile d'être centré par rapport à son alvéole dans la position de déconnexion.

Dans cette position, il existe un jeu radial très faible entre la bague et le contact ainsi qu'entre la bague et l'alvéole.

Dans la position de connexion du contact mobile, il existe entre les portées en regard de la bague et du contact mobile un jeu radial suffisant pour accepter les excentrations des alvéoles.

De préférence, le contact optique mobile est le contact mâle du dispositif de connexion de fibres optiques, et des moyens élastiques sont prévus pour repousser le contact optique mâle vers sa position de connexion. En particulier, ces moyens élastiques peuvent être constitués d'un ressort de compression monté entre l'extrémité frontale de la bague et une portée en décrochement du contact optique mâle mobile, le déplacement du contact mobile mâle par rapport à la bague lors de la connexion s'effectuant à l'encontre de la force de ce ressort, et ledit ressort repoussant, dans la position de connexion, le contact mâle en direction du contact femelle.

Dans un mode de réalisation particulier de l'invention, le contact mobile comporte sur sa surface extérieure au moins deux portées cylindriques de diamètres différents, la bague comportant une portée se trouvant sensiblement en appui contre une portée du contact mobile dans la position de déconnexion, et en regard et espacée à jeu d'une autre portée de plus faible diamètre dudit contact dans la position de déconnexion. De préférence, le contact comporte deux portées de diamètres différents contre lesquelles s'appuient sensiblement deux portées de diamètres différents de la bague dans la position de déconnexion.

Dans un autre mode de réalisation, la bague et le contact comportent des portées coniques en appui mutuel dans la position de déconnexion.

Dans un mode de réalisation particulier, notamment lorsque les faces optiques des contacts sont réalisées en oblique ou lorsque l'on souhaite obtenir une bonne reproductibilité des pertes de la connexion lors d'un grand nombre d'accouplements, il est prévu des moyens de positionnement angulaire du contact optique mobile par rapport à la carte sur laquelle est monté l'élément de connecteur alvéolaire logeant ledit contact optique mobile.

Dans un mode préféré de réalisation, ces moyens de positionnement angulaire sont constitués d'un doigt en saillie radialement de la bague en s'engageant dans une encoche radiale d'un trou cylindrique ménagé dans la carte correspondante pour le passage du contact, ladite bague comportant en outre une clavette logée dans une rainure longitudinale du contact mobile.

On empêche ainsi le contact de tourner librement dans son alvéole de réception lorsque l'élément de connecteur est monté sur la carte.

Les dispositifs de connexion de fibres optiques susceptibles d'être utilisés dans le cadre de l'invention peuvent être de tout type approprié et notamment du type décrit par la société déposante dans EP-A-0063085.

Dans ce cas, le contact optique mâle monté à l'extrémité d'un câble à fibre optique comporte un embout présentant une protubérance tubulaire axiale, et en retrait de la protubérance et entourant la partie arrière de celle-ci, un évidement annulaire dont la paroi présente par exemple un profil conique.

Le contact optique femelle comporte un raccord femelle de reconstitution présentant dans sa partie centrale, à l'intérieur d'un perçage longitudinal, un corps de butée, notamment une sphère, présentant un orifice axial traversant et, autour de celui-ci, des portées de contact pour d'un côté l'embout du contact mâle et de l'autre côté pour l'embout mâle monté à l'extrémité de l'autre câble à fibre optique à connecter et préalablement engagé dans le raccord femelle de reconstitution. Le contact optique femelle comporte ainsi, d'une part le raccord femelle de reconstitution et d'autre part, le second embout mâle.

Les portées en regard du corps de butée et des embouts mâles sont agencées de façon telle que lors de tout mouvement relatif des portées en contact, l'extrémité d'une fibre au niveau de la face d'extrémité de la protubérance d'un embout mâle soit maintenue à une distance constante prédéterminée du centre du corps de butée.

Les faces d'extrémités des protubérances des embouts et des fibres immobilisés à l'intérieur sont droites, c'est-à-dire perpendiculaires à l'axe longitudinal du dispositif de connexion mais peuvent être inclinées par rapport à cet axe lorsqu'une fonction d'atténuation est recherchée comme décrit par exemple dans la demande de brevet français FR-A-2 598 820 de la société déposante.

Dans le but de mieux faire comprendre l'invention, on va maintenant en décrire à titre d'exemple nullement limitatif un mode de réalisation en se référant au dessin annexé dans lequel :
- la figure 1 est une vue en coupe d'un élément de connecteur dans une alvéole duquel est monté un contact optique mâle,
- la figure 2 est une vue en coupe montrant un connecteur selon l'invention pour cartes à circuit imprimé en position de connexion, une des cartes étant omise,
- la figure 3 est une vue en coupe d'une variante de réalisation de l'élément de connecteur de la figure 1,
- la figure 4 est une vue en bout prise dans le sens de la flèche A de la figure 3.
- les figures 5 et 6 sont des vues partiellement en coupe de variantes de contact optique mâle selon l'invention.

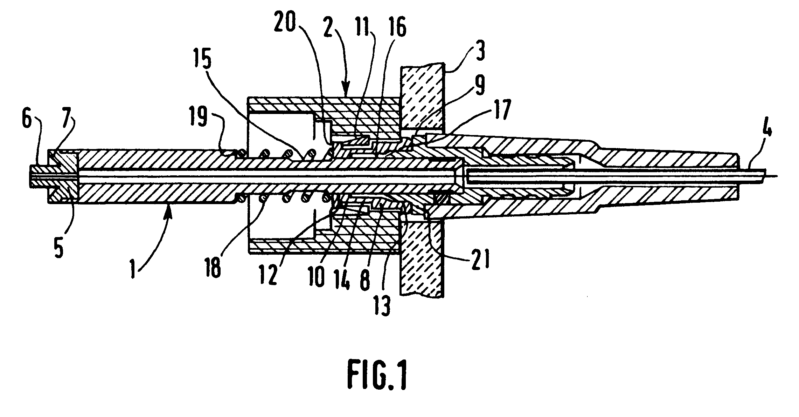

On se réfère tout d'abord à la figure 1.

Cette figure représente en coupe un contact optique mâle désigné globalement par 1 monté dans une alvéole du corps isolant d'un élément de connecteur alvéolaire femelle désigné par 2 et monté sur une carte-mère à circuit imprimé 3.

Le contact 1 est monté à l'extrémité d'un câble à fibre optique 4, par exemple du type monomode, et comporte à son extrémité avant un embout 5 présentant une protubérance axiale 6 à l'extrémité de laquelle se trouve l'extrémité de la fibre optique, et en retrait de ladite protubérance une portée conique 7.

Selon l'invention, il est prévu une bague 8 retenue axialement dans l'alvéole de la fiche 2, et montée à jeu radial faible dans celle-ci.

A cet effet, la bague 8 comporte à son extrémité arrière une collerette 9 s'engageant derrière la face d'extrémité arrière de la fiche 2 et une gorge 10 dans laquelle est logée une rondelle fendue 11 comportant une portée extérieure conique en saillie vers l'arrière en appui contre une des portées annulaires de la bague 8 définissant la gorge 10 et une portée annulaire de la fiche 2.

Dans l'exemple illustré, la bague comporte deux portées cylindriques 12, 13 espacées axialement et de diamètres différents, séparées par une portée cylindrique de diamètre intermédiaire 14.

La surface extérieure du contact mâle 1 présente également plusieurs portées cylindriques successives de diamètres différents, à savoir une portée de diamètre réduit 15, une portée de diamètre intermédiaire 16 et une portée de plus grand diamètre 17.

Comme on le voit sur la figure 1 dans la position de déconnexion, le contact mâle 1 est muni de la bague 8, l'agencement étant tel que des portées de la surface extérieure du contact sont sensiblement en appui contre des portées de la surface intérieure de la bague, le terme "sensiblement en appui" signifiant qu'il existe un jeu radial très faible entre ces portées.

Comme on le voit sur la figure 1 dans la position de déconnexion, la portée 12 de la bague est sensiblement en appui de la portée 16 du contact et de la même manière, la portée 13 de la bague est sensiblement en appui de la portée 17 du contact.

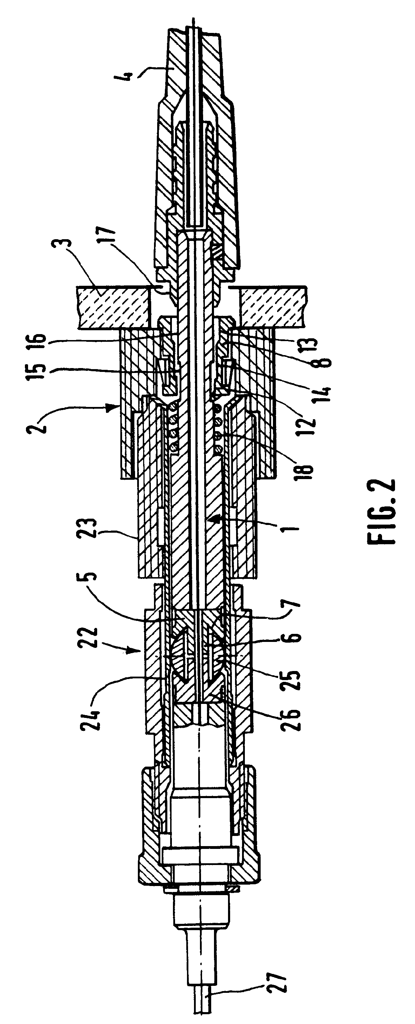

Le contact mâle 1 est mobile axialement par rapport à la bague 8, laquelle est fixe dans l'alvéole, un ressort de rappel 18 monté autour du contact et prenant appui contre une portée 19 du contact et la face d'extrémité avant 20 de la bague 8 étant prévu pour ramener le contact dans la position de déconnexion de la figure 1 depuis la position de connexion illustrée dans la figure 2 qui sera décrite ci-après.

Le déplacement axial longitudinal du contact par rapport à la bague est limité par une collerette de butée 21 réalisée sur le contact et venant en appui contre la collerette 9 à l'arrière de la bague.

La figure 2 illustre le connecteur selon l'invention en position de connexion, un contact optique femelle désigné globalement par 22 et logé dans un élément de connecteur mâle 23 étant connecté à l'élément de contact mâle 1.

Dans la figure 2, la carte à circuit imprimé "fille" n'a pas été illustrée.

Le contact optique femelle 22 comporte un raccord femelle de reconstitution 24 avec un corps de butée sphérique évidé 25 et un embout mâle 26 analogue à l'embout mâle 5 et monté à l'extrémité d'une ferrule fixée au câble à fibre optique 27 à raccorder au câble 4.

Comme on le voit sur la figure 2, dans la position de connexion, le ressort 18 repousse le contact optique mâle 1 en direction du contact femelle, de façon à repousser élastiquement l'embout 5 contre le corps de butée 25.

Comme on le voit sur la figure 2 dans cette position de connexion et du fait du déplacement axial intervenu du contact optique mâle 1 par rapport à la bague 8, il existe un jeu radial important entre les portées du contact et celles de la bague qui, dans la position de déconnexion illustrée sur la figure 1, étaient sensiblement en appui.

La portée 12 de la bague se trouve ainsi en regard et à distance de la portée de plus petit diamètre 15 du contact et la portée 13 de la bague se trouve en regard et à distance de la portée 16 du contact.

Ce jeu radial permet d'accepter les excentrations des alvéoles des éléments de connecteurs 2 et 23.

On peut ainsi selon l'invention utiliser des alvéoles prévues auparavant pour d'autres types de contacts, par exemple des contacts coaxiaux, en vue de réaliser des connexions de fibres optiques.

Dans un mode de réalisation non représenté, la portée 17 du contact peut avoir le même diamètre que la portée 16 de celui-ci, et les portées 13 et 14 de la bague de même diamètre que la portée 12 de celle-ci.

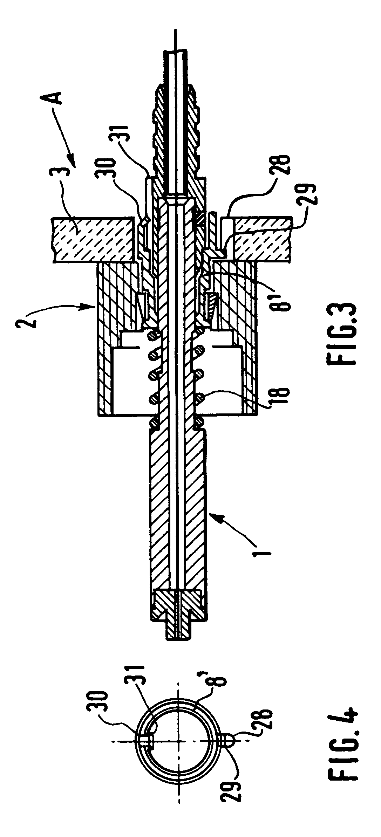

La variante de la figure 3 diffère de celle de la figure 1 par le fait qu'il est prévu des moyens de positionnement angulaire du contact optique mâle mobile 1 sur la carte 3.

A cet effet, le trou cylindrique percé dans la carte pour le passage du contact comporte une encoche 28 recevant avec jeu un doigt radial 29 de la bague 8′.

La bague 8′ comporte en outre une clavette 30 logée dans une rainure 31 du contact.

Grâce à ces caractéristiques, le contact ne peut tourner librement dans l'alvéole dans laquelle il est monté.

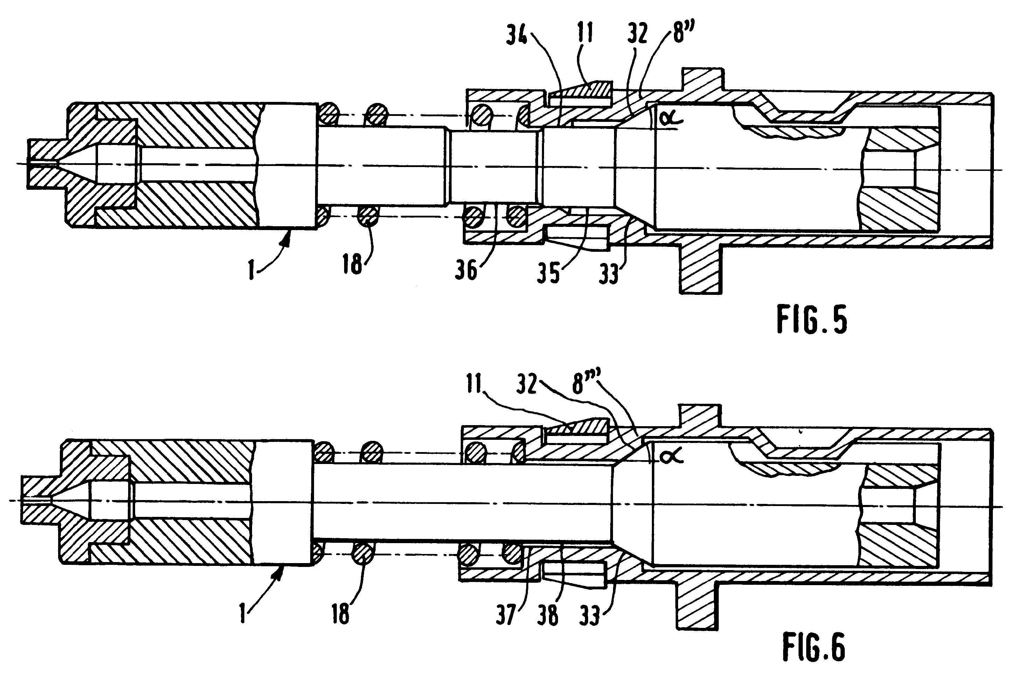

Dans la variante illustrée à la figure 5, la bague 8˝ comporte sur sa surface intérieure une portée conique 32 en appui dans la position de déconnexion contre une portée conique 33 de la surface extérieure du contact 1. L'angle α des portées coniques 32 et 33 avec l'axe du contact est de préférence compris entre 10 et 20° et avantageusement de 15°.

La bague 8˝ comporte une portée cylindrique 34 qui, comme la portée cylindrique 12 du mode de réalisation des figures 1 et 2, est sensiblement en appui dans la position de déconnexion d'une portée cylindrique 35 du contact qui comporte une portée adjacente 36 de plus faible diamètre. Fonctionnellement les portées 35 et 36 correspondent aux portées 16 et respectivement 15 du mode de réalisation des figures 1 et 2.

Le mode de réalisation de la figure 6 diffère de celui de la figure 5 par le fait que la bague 8‴ comporte une portée cylindrique 37 espacée à jeu radial en position de déconnexion de la portée cylindrique 38 du contact. Dans ce mode de réalisation, seules les portées coniques 32 et 33 assurent la fonction de préguidage selon l'invention.

## Revendications

1. Connecteur alvéolaire, comportant un élément de connecteur mâle (23) et un élément de connecteur femelle (2), présentant des corps pourvus d'alvéoles alignées aptes à recevoir au moins un dispositif de connexion de fibres optiques formé d'un contact mâle (1) et d'un contact femelle (22) coopérants, aptes à être engagés chacun dans une alvéole de l'un des éléments de connecteurs, l'un desdits contacts (22) étant monté fixe dans son alvéole et l'autre (1) étant mobile axialement dans son alvéole entre une position de déconnexion et une position de connexion du dispositif de connexion de fibres optiques, caractérisé par le fait qu'il comprend une bague (8; 8′; 8˝; 8‴) entourant ledit contact mobile (1), montée et immobilisée axialement dans l'alvéole, ledit contact mobile et ladite bague comportant sur leurs surfaces respectives en regard l'une de l'autre, des portées coniques et/ou cylindriques de diamètres différents, agencées et disposées de manière telle que dans ladite position de déconnexion et, de préférence, également pendant une partie de la course de déplacement du contact mobile au cours des phases de connexion et de déconnexion, au moins une portée (12, 13; 32, 34; 32) de ladite bague est sensiblement en appui contre une portée (16, 17; 33,35; 33) du contact optique mobile afin qu'il existe un jeu radial très faible entre ces portées, et que dans ladite position de connexion, lesdites portées de ladite bague et dudit contact mobile sont espacées les unes des autres afin qu'il existe un jeu radial important entre ces portées.

2. Connecteur selon la revendication 1, caractérisé par le fait que ledit contact optique mobile est le contact mâle (1) du dispositif de connexion de fibres optiques, et que des moyens élastiques (18) sont prévus pour repousser le contact optique mâle vers sa position de connexion.

3. Connecteur selon la revendication 2, caractérisé par le fait que lesdits moyens élastiques comportent un ressort de compression (18) monté entre l'extrémité frontale (20) de ladite bague (8 ; 8′; 8˝ ; 8′′′) et une portée (19) en décrochement du contact optique mâle mobile, le déplacement du contact mobile mâle par rapport à la bague, lors de la connexion s'effectuant à l'encontre de la force dudit ressort qui repousse dans la position de connexion le contact mâle en direction du contact femelle.

4. Connecteur selon l'une quelconque des revendications précédentes, caractérisé par le fait que ladite bague comporte sur sa surface intérieure une portée cylindrique (12 ; 34) se trouvant sensiblement en appui contre une portée cylindrique (16 ; 35) de la surface extérieure du contact mobile dans la position de déconnexion et en regard et espacée à jeu d'une autre portée cylindrique (15 ; 36) de plus faible diamètre dudit contact dans la position de connexion.

5. Connecteur selon l'une quelconque des revendications 3 et 4, caractérisé par le fait que ledit contact mâle comporte sur sa surface extérieure deux portées cylindriques (16, 17) de diamètres différents contre lesquels s'appuient sensiblement deux portées (12, 13) de diamètres différents de la bague dans la position de déconnexion.

6. Connecteur selon l'une quelconque des revendications précédentes, caractérisé par le fait que ladite bague comporte sur sa surface intérieure une portée conique (32) se trouvant en appui sur une portée conique (33) de la surface extérieure du contact mobile dans la position de déconnexion.

7. Connecteur selon la revendication 6, caractérisé par le fait que lesdites portées coniques font avec l'axe du contact un angle compris entre 10 et 20° et de préférence de 15°.

8. Connecteur selon l'une quelconque des revendications précédentes, caractérisé par le fait qu'il comporte des moyens de positionnement angulaire du contact optique mobile par rapport à une carte (3) sur laquelle est monté l'élément de connecteur alvéolaire (2) logeant ledit contact mobile.

9. Connecteur selon la revendication 8, caractérisé par le fait que lesdits moyens de positionnement angulaire comportent un doigt (29) en saillie radialement de la bague (8′) et s'engageant dans une encoche radiale (28) d'un trou cylindrique ménagé dans la carte pour le passage du contact, ladite bague (8′) comportant en outre une clavette (30) logée dans une rainure longitudinale (31) du contact mobile.

## Patentansprüche

1. Zellenförmiger Verbinder mit einem steckerförmigen Kupplungselement (23) und einem buchsenförmigen Kupplungselement (2), die Körper bilden, die mit ausgerichteten Zellen versehen sind, die dazu ausgebildet sind, wenigstens eine faseroptische Steckverbindung aufzunehmen, die gebildet wird durch einen steckerförmigen Kontakt (1) und einen damit zusammenwirkenden buchsenförmigen Kontakt (22), die dazu ausgebildet sind, jeder in eine Zelle eines der Kupplungselemente einzugreifen, wobei einer der Kontakte (22) fest in seiner Zelle montiert ist und der andere (1) in seiner Zelle axial zwischen einer Trennposition und einer Verbindungsposition der faseroptischen Steckverbindung beweglich montiert ist, dadurch gekennzeichnet, daß er einen Ring (8; 8′; 8˝; 8‴) aufweist, der den beweglichen Kontakt (1) umgibt und in der Zelle montiert und in Axialrichtung fixiert ist, wobei der bewegliche Kontakt und der Ring auf ihren jeweiligen einander zugewandten Oberflächen konische und/oder zylindrische Bereiche mit verschiedenen Durchmessern aufweisen, die so ausgebildet und angeordnet sind, daß in der Trennposition und vorzugsweise auch während eines Teils der Bewegung des beweglichen Kontakts im Laufe der Vorgänge des Herstellens und Trennens der Verbindung wenigstens ein Bereich (12, 13; 32, 34; 32) des Ringes im wesentlichen an einem Bereich (16, 17; 33, 35; 33) des beweglichen optischen Kontaktes anliegt, so daß zwischen diesen Bereichen ein sehr kleines radiales Spiel besteht, und daß in der Verbindungsposition diese Bereiche des Ringes und des beweglichen Kontakts zueinander beabstandet sind, so daß zwischen diesen Bereichen ein großes radiales Spiel besteht.

2. Verbinder nach Anspruch 1, dadurch gekennzeichnet, daß der bewegliche optische Kontakt der steckerförmige Kontakt (1) der faseroptischen Steckverbindung ist und daß elastische Mittel (18) zum Zurückdrücken des steckerförmigen optischen Kontakts in Richtung auf seine Verbindungsposition vorgesehen sind.

3. Verbinder nach Anspruch 2, dadurch gekennzeichnet, daß die elastischen Mittel eine Druckfeder (18) aufweisen, die zwischen dem stirnseitigen Ende (20) des Ringes (8; 8′; 8˝; 8‴) und einer Schulter (19) des beweglichen steckerförmigen optischen Kontakts montiert ist, wobei die Bewegung des beweglichen steckerförmigen Kontakts in bezug auf den Ring beim Herstellen der Verbindung gegen die Kraft der Feder erfolgt, die den steckerförmigen Kontakt in der Verbindungsposition in Richtung auf den buchsenförmigen Kontakt zurückdrückt.

4. Verbinder nach einem der vorstehenden Ansprüche, dadurch gekennzeichnet, daß der Ring an seiner inneren Oberfläche einen zylindrischen Bereich (12; 34) aufweist, der in der Trennposition im wesentlichen an einem zylindrischen Bereich (16; 35) der gegenüberliegenden äußeren Oberfläche des beweglichen Kontaktes in Anlage ist und in der Verbindungsposition mit Spiel zu einem anderen zylindrischen Bereich (15; 36) mit kleinerem Durchmesser des Kontaktes beabstandet ist.

5. Verbinder nach Anspruch 3 oder 4, dadurch gekennzeichnet, daß der steckerförmige Kontakt auf seiner äußeren Oberfläche zwei zylindrische Bereiche (16, 17) mit unterschiedlichen Durchmessern aufweist, an denen in der Trennposition zwei im Durchmesser verschiedene Bereiche (12, 13) des Ringes im wesentlichen in Anlage sind.

6. Verbinder nach einem der vorstehenden Ansprüche, dadurch gekennzeichnet, daß der Ring auf seiner äußeren Oberfläche einen konischen Bereich (32) aufweist, der an einem konischen Bereich (33) der äußeren Oberfläche des in der Trennposition befindlichen beweglichen Kontaktes in Anlage ist.

7. Verbinder nach Anspruch 6, dadurch gekennzeichnet, daß die konischen Bereiche mit der Achse des Kontakts einen Winkel zwischen 10 und 20°, vorzugsweise von 15° bilden.

8. Verbinder nach einem der vorstehenden Ansprüche, dadurch gekennzeichnet, daß er Mittel zur Winkelpositionierung des beweglichen optischen Kontakts in bezug auf eine Karte (3) aufweist, an welcher das zellenförmige Kupplungselement (2) montiert ist, das den beweglichen Kontakt aufnimmt.

9. Verbinder nach Anspruch 8, dadurch gekennzeichnet, daß die Mittel zur Winkelpositionierung einen Finger (29) umfassen, der radial von dem Ring (8′) vorspringt und in eine radiale Aussparung (28) eines für den Durchtritt des Kontaktes ausgebildeten zylindrischen Loches in der Karte eingreift, wobei der Ring (8′) außerdem einen Keil (30) aufweist, der in einer Längsnut (31) des beweglichen Kontakts liegt.

## Claims

1. Alveolar connector comprising a male connector element (23) and a female connector element (2), with bodies fitted with aligned alveoli able to receive at least one fibre-optic connection device formed by a co-operating male (1) and a female contact (22) each able to be engaged in an alveolus of one of the connector elements, one of the said contacts (22) being permanently mounted in its alveolus and the other (1) being axially mobile in its alveolus between a disconnection position and a connection position of the fibre-optic connection device, characterized in that it comprises a ring (8; 8′; 8˝; 8‴) surrounding the said mobile contact (1) and mounted and immobilized axially in the alveolus, the said mobile contact and the said ring comprising on their respective surfaces facing each other tapered and/or cylindrical bearing surfaces of different diameters, arranged and positioned such that in the said disconnection position and preferably also during part of the displacement travel of the mobile contact during the connection and disconnection phases, at least one bearing surface (12, 13; 32, 34; 32) of the said ring is approximately supported against a bearing surface (16, 17; 33, 35; 33) of the mobile optical contact such that there is a very slight radial play between these bearing surfaces, and that in the said connection position, the said bearing surfaces of the said ring and the said mobile contact are distanced from each other such that there is a considerable radial play between these bearing surfaces.

2. Connector according to claim 1, characterized in that the said mobile optical contact is the male contact (1) of the fibre-optic connection device, and that elastic means (18) are provided to repel the male optical contact towards its connection position.

3. Connector according to claim 2, characterized in that the said elastic means comprise a compression spring (18) mounted between the front end (20) of the said ring (8; 8′; 8˝; 8‴) and a bearing surface (19) recessed from the mobile male optical contact, the displacement of the male mobile contact in relation to the ring during connection taking place against the force of the said spring which repels the male contact in the direction of the female contact in the connection position.

4. Connector according to any of the preceding claims, characterized by the fact that the said ring comprises on its inner surface a cylindrical bearing surface (12; 34) approximately resting against a cylindrical bearing surface (16; 35) of the outer surface of the mobile contact in the disconnection position and facing at a distance another cylindrical bearing surface (15; 36) of smaller diameter of the said contact in the connection position.

5. Connector according to any of claims 3 and 4, characterized in that the said male contact comprises on its outer surface two cylindrical bearing surfaces (16, 17) of different diameters against which approximately rest two bearing surfaces (12, 13) of different diameters of the ring in the disconnection position.

6. Connector according to any of the preceding claims, characterized in that the said ring comprises on its inner surface a tapered bearing surface (32) resting on a tapered bearing surface (33) of the outer surface of the mobile contact in the disconnection position.

7. Connector according to claim 6, characterized in that the said tapered bearing surfaces form with the contact axis an angle of between 10 and 20° and preferably 15°.

8. Connector according to any of the preceding claims, characterized in that it comprises angular positioning means of the mobile optical contact in relation to a card (3) on which is mounted the alveolar connector element (2) housing the said mobile contact.

9. Connector according to claim 8, characterized in that the said angular positioning means comprise a finger (29) projecting radially from the ring (8′) and engaging in a radial recess (28) of a cylindrical hole arranged in the card for passage of the contact, the said ring (8′) also comprising a key (30) housed in a longitudinal groove (31) of the mobile contact.
